# EUROPEAN PATENT SPECIFICATION

(11) **EP 4 352 850 B1**
(45) Date of publication and mention of the grant of the patent: **06.11.2024**
(21) Application number: 22822185.9
(22) Date of filing: 29.11.2022
(51) Int. Cl.: H02J 7/00, B60L 53/00

(54) **A METHOD AND APPARATUS FOR CONTROLLING A CHARGING PROCESS FOR CHARGING A VEHICLE BATTERY OF AN ELECTRIC VEHICLE**
VERFAHREN UND VORRICHTUNG ZUR STEUERUNG EINES LADEVERFAHRENS ZUM LADEN EINER FAHRZEUGBATTERIE EINES ELEKTROFAHRZEUGS
PROCÉDÉ ET APPAREIL DE COMMANDE D'UN PROCESSUS DE CHARGE POUR CHARGER UNE BATTERIE D'UN VÉHICULE ÉLECTRIQUE

(30) Priority: 18.01.2022 EP 22152020
(43) Date of publication of application: 17.04.2024
(73) Proprietor: Fronius International GmbH, 4643 Pettenbach (AT)
(72) Inventor: GERSTLACHER, Florian, 4643 Pettenbach (AT)
(74) Representative: Bratovic, Nino Maria
(86) International application number: PCT/EP2022/083692
(87) International publication number: WO 2023/138818

(56) References cited:
- WO-A1-2016/087150
- KR-A- 20190 056 084
- US-A1- 2011 043 165
- US-A1- 2017 057 369

## Description

The invention relates to a method and apparatus for controlling a charging process for charging a vehicle battery of an electric vehicle by a charging apparatus supplied by power sources.

Electric vehicles comprise electro motors receiving energy from a vehicle battery of the electric vehicle. An electric vehicle battery requires recharging by a charging apparatus. For charging the electric vehicle is connected via a charging cable to the charging apparatus to receive a charging current. The charging apparatus itself can be connected to different kind of power sources available at the location of the charging apparatus. Further, different kinds of electric vehicles with different types of integrated vehicle batteries can be connected to the charging apparatus for recharging the vehicle battery.

Document WO 2016/087150 A1 discloses an electric vehicle charging controller. The charging controller comprises a first interface connectable to an electric vehicle charge source for receiving a charging current, a second interface connectable to an electric vehicle for providing the charging current to a battery management system in the electric vehicle to charge a battery therein, a first communication unit for receiving a charging message via a communication network, and a control unit for controlling a charging current provided from the charge source to the electric vehicle, the controlling at least in part being performed in response to a first information associated with a charging message received by the first communication unit.

US 2017/057369 A1 describes a power supply system for converting or isolating charging power supplied to a vehicle charging system within a battery-operated vehicle, using a solid state transformer as an isolation transformer.

KR 2019 0056084 A describes an electric vehicle charger for simultaneously charging a plurality of electric vehicles. Remaining electric power which is transferred to a first electric vehicle is transferred to another, second electric vehicle when the electric power transmitted to the first electric vehicle being charged falls below the maximum electric power of the charger.

US 2011/043165 A1 describes a system and a method for charging a plug-in electric vehicle with an external power source, even when the overall power requested by the plug-in electric vehicles exceeds the overall power available from the external power source.

It is one of the objects of the present invention to provide a method and apparatus for charging a vehicle battery which takes into account specific charging requirements of the electric vehicle connected to the charging apparatus and the power sources available to the charging apparatus for charging the vehicle battery.

This object is achieved by a charging apparatus comprising the features of claim 1.

The invention provides according to a first aspect a charging apparatus for charging a vehicle battery of an electric vehicle comprising a connector having a control pilot pin used by a charging controller of said charging apparatus to control a charging of the vehicle battery of an electric vehicle connected via a charging cable to said charging apparatus,
wherein the charging controller is adapted to transmit via the control pilot pin a PWM control pilot signal encoding available power sources of said charging apparatus to a vehicle controller of the electric vehicle. The charging controller of the charging apparatus is further adapted to apply switch control signals to one or more relays to switch AC charging phases supplied by the inverter of the charging apparatus via AC phase or PV panel DC supply lines, and to send information by changing the PWM voltage level on the control pilot pin to indicate which AC charging phases are available for charging the vehicle battery to the vehicle controller to trigger a soft switching on the concerned AC charging phases.

The charging apparatus according to the first aspect of the present invention provides the advantage that the communication between the charging apparatus and the electric vehicle is performed via a single control pilot pin thus reducing the complexity of the communication between the charging apparatus and the vehicle controller of the electric vehicle. The required communication circuitry does not only have low complexity but is also robust against environmental influences. Further, this kind of communication allows an easy integration into existing charging plugs and charging sockets of a charging cable.

A further advantage of the charging apparatus according to the first aspect of the present invention resides in the fact that it can inform the vehicle controller of the electric vehicle about the power sources currently available to the charging apparatus such that the charging process can be optimized. As a consequence, the charging process performed by the charging apparatus can be performed within a minimal charging time. The charging process can be performed rapidly for different kinds of vehicle batteries. Further, the use of a control pilot pin allows also for a bidirectional communication between the charging controller of the charging apparatus and the vehicle controller of the electric vehicle. In this way, the charging process can be further optimized taking into account the specific requirements of the electric vehicle and its integrated vehicle battery.

In a possible embodiment of the charging apparatus according to the first aspect of the present invention, the PWM control pilot signal comprises a modulated signal amplitude encoding available AC charging phases of the charging apparatus.

In a further possible embodiment of the charging apparatus according to the first aspect of the present invention, the PWM control pilot signal comprises a modulated duty cycle encoding further charging parameters relevant for charging the vehicle battery of the electric vehicle during a charging process.

In a further possible embodiment of the charging apparatus according to the first aspect of the present invention, the charging apparatus comprises an inverter adapted to convert a current generated by at least one primary power source into at least one AC charging phase forming an available power source of said charging apparatus.

In a still further possible embodiment of the charging apparatus according to the first aspect of the present invention, the primary power source of the charging apparatus comprises one or more photovoltaic panels.

In a further possible embodiment of the charging apparatus according to the first aspect of the present invention, the charging controller of the charging apparatus is adapted to evaluate available energy levels of the primary power sources connected to the inverter of the charging apparatus to activate or to deactivate available AC charging phases and to notify the vehicle controller of the electric vehicle by modulating the signal amplitude of the PWM control pilot signal accordingly.

In a still further possible embodiment of the charging apparatus according to the first aspect of the present invention, the vehicle controller of the electric vehicle is adapted to adjust the power consumption during a charging process of the vehicle battery in response to the PWM control signal received through the control pilot pin of the connector from the charging controller of said charging apparatus.

In a possible embodiment of the charging apparatus according to the first aspect of the present invention wherein the charging controller is able to change the available AC charging phases during the charging process or charging event.

In a still further possible embodiment of the charging apparatus according to the first aspect of the present invention, the charging controller of the charging apparatus is adapted to process vehicle data received from the vehicle controller of the electric vehicle to generate the switch control signals applied to the one or more relays depending on a charging mode and/or depending on available energy levels of the primary power sources connected to the inverter of the charging apparatus.

In a still further possible embodiment of the charging apparatus according to the first aspect of the present invention, the vehicle data received by the charging controller of the charging apparatus from the vehicle controller of the electric vehicle indicate a type of the electric vehicle and/or a type of the vehicle battery within the electric vehicle, a phase compatibility of the electric vehicle and required vehicle charging parameters including a charging current capability and a charging voltage capability of the vehicle battery and/or of the charging cable and a state of charge of the vehicle battery.

In a further possible embodiment of the charging apparatus according to the first aspect of the present invention, the charging apparatus comprises a user interface having an output unit adapted to display the available charging sources notified by the charging controller of the charging apparatus to the vehicle controller of the electric vehicle by means of the PWM control pilot signal, a momentary charging mode, available energy levels of the primary power sources connected to the inverter of the charging apparatus, charging parameters of the charging apparatus and/or charging parameters of the electric vehicle and/or of the vehicle battery of the electric vehicle.

In a further possible embodiment of the charging apparatus according to the first aspect of the present invention, the user interface further comprises an input unit adapted to receive user commands of a user.

In a further possible embodiment of the charging apparatus according to the first aspect of the present invention the user interface comprises a smart device connected to the charging controller.

In a further possible embodiment of the charging apparatus according to the first aspect of the present invention, the charging apparatus is connected to at least one secondary power source including the power supply grid and/or an energy storage bank.

In a further possible embodiment of the charging apparatus according to the first aspect of the present a pin of an IO interface of an inverter or photovoltaic device is provided to be multiplexed to a pilot control function to charge the vehicle battery of the electric vehicle by connecting a charging cable to this terminal to control the charge process or charging event.

The invention provides according to a further aspect a method for controlling a charging process for charging a vehicle battery of an electric vehicle by a charging controller of a charging apparatus comprising the features of claim 16.

The invention provides according to the second aspect a method for controlling a charging process for charging a vehicle battery of an electric vehicle by a charging controller of a charging apparatus, the method comprising the
transmitting by the charging controller of the charging apparatus a PWM control signal encoding available power sources of said charging apparatus to a vehicle controller of the electric vehicle, applying switch control signals to one or more relays to switch AC charging phases supplied by an inverter of the charging apparatus via AC phase or photovoltaic panel DC supply lines, and sending information by changing the PWM voltage level on the control pilot pin to indicate which AC charging phases are available for charging the vehicle battery to the vehicle controller to trigger a soft switching on the concerned AC charging phases.

In a possible embodiment of the method according the second aspect of the present invention, the power consumption of the vehicle battery is adjusted during a charging process by the vehicle controller of the electric vehicle in response to the PWM control pilot signal received from the charging controller of the charging apparatus.

In a possible embodiment of the method according to the second aspect of the present invention, the PWM control pilot signal comprises a modulated signal amplitude encoding available AC charging phases.

In the following, possible embodiments of the different aspects of the present invention are described in more detail with reference to the enclosed figures.
- Fig. 1: shows a block diagram for illustrating a possible exemplary embodiment of a charging apparatus for charging a vehicle battery of an electric vehicle according to the first aspect of the present invention;
- Fig. 2: shows a block diagram of a possible exemplary embodiment of a charging apparatus according to the first aspect of the present invention;
- Fig. 3: shows a block diagram of a further possible embodiment of a charging apparatus according to the first aspect of the present invention;
- Figs.4A, 4B: show signal diagrams for illustrating a possible exemplary embodiment of a method and apparatus for charging a vehicle battery of an electric vehicle according to the present invention;
- Fig. 5: shows a flowchart for illustrating a possible exemplary embodiment of a method for charging a vehicle battery according to the second aspect of the present invention;
- Fig. 6: shows a further flowchart for illustrating a possible exemplary embodiment of a method for charging a vehicle battery according to the second aspect of the present invention.

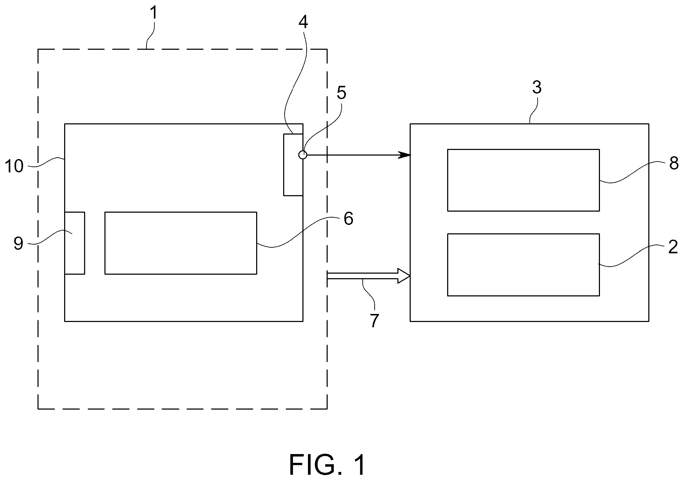

Fig. 1 shows a block diagram for illustrating a charging apparatus 1 used for charging a vehicle battery 2 of an electric vehicle 3 such as an electric car, electric bicycle, electric train or electric ship or electric truck driven by an electric motor. The charging apparatus 1 comprises a connector 4 having a control pilot pin 5 used by a charging controller 6 of the charging apparatus 1 to control a charging of the vehicle battery 2 of the electric vehicle 3 being connected via a charging cable 7 to the charging apparatus 1 as illustrated in Fig. 1. The charging controller 6 of the charging apparatus 1 is adapted to transmit via the control pilot pin 5 a PWM control pilot signal encoding available power sources of the charging apparatus 1 to a vehicle controller 8 of the electric vehicle 3. Available power sources can comprise at least one primary power source as well as secondary power sources. A primary power source can comprise in a possible implementation one or more photovoltaic panels generating DC power caused by solar radiation. The DC power generated by the photovoltaic panels can be converted into AC power by an inverter 10 of the charging apparatus 1.

The functionality of the pin 5 of the connector 4 is in a preferred embodiment configurable. This can be achieved by a multiplexer provided in line 36 having a control input connected to a control output of the charging controller 6 adapted to control the state of the multiplexer. In a possible embodiment pin 5 can be configured as an input pin or as an output pin of the connector 4.

Other power sources can also be available at the location of the charging apparatus 1 comprising at least one secondary power source including for instance a power supply grid and/or a local energy storage bank. The local energy storage bank can comprise an inverter battery. The inverter storage bank can also comprise other kinds of batteries such as traction batteries of fork lifts.

The PWM control pilot signal supplied by the charging apparatus 1 to the vehicle controller 8 of the electric vehicle 3 can comprise in a possible embodiment a modulated signal amplitude encoding available AC charging phases L1, L2, L3 of the charging apparatus 1. The PWM control pilot signal supplied via the control pilot pin 5 to the vehicle controller 8 of the electric vehicle 3 can comprise in a possible embodiment a modulated duty cycle encoding further charging parameters relevant for the charging of the vehicle battery 2 of the electric vehicle 3 during the charging process. The charging apparatus 1 can comprise an inverter 10 which is adapted to convert a current generated by the at least one primary power source, e.g. the photovoltaic panels, into at least one AC charging phase L1, L2, L3 forming available primary power sources of the charging apparatus 1 which can be used for charging the vehicle battery 2.

In a possible embodiment, the charging controller 6 of the charging apparatus 1 is adapted to evaluate available energy levels of the primary power sources connected to the inverter 10 of the charging apparatus 1 to activate or to deactivate available AC charging phases L1, L2, L3 and to notify the vehicle controller 8 of the electric vehicle 3 about the activated/deactivated AC charging phases L1,L2,L3 by modulating the signal amplitude of the PWM control pilot signal applied to the vehicle controller 8. In a possible embodiment, the vehicle controller 8 of the electric vehicle 3 is adapted to adjust the electric power consumption during a charging process of the vehicle battery 2 in response to the PWM control pilot signal received by the vehicle controller 8 through the control pilot pin 5 of the connector 4 from the charging controller 6 of the charging apparatus 1.

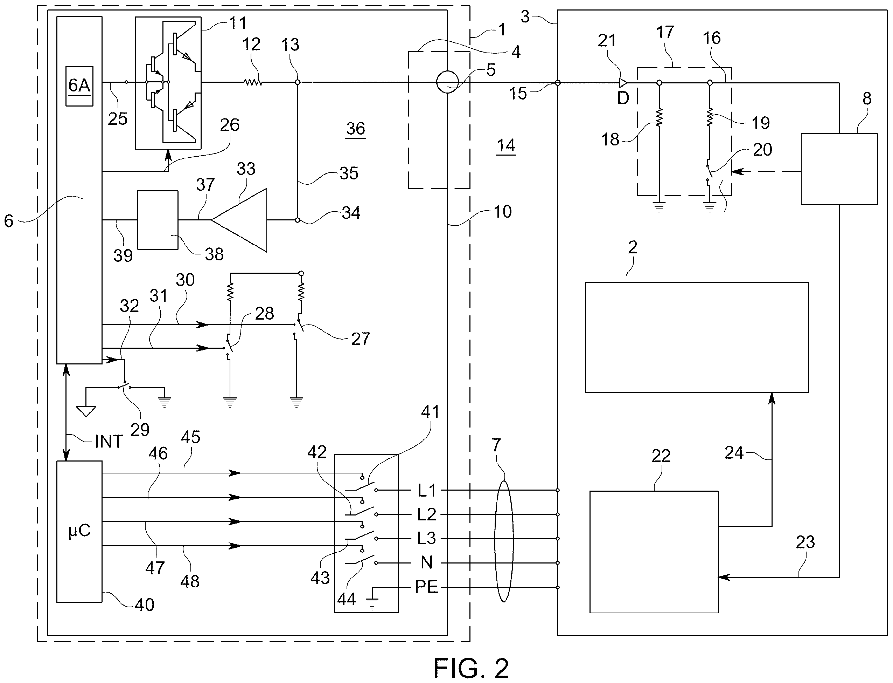

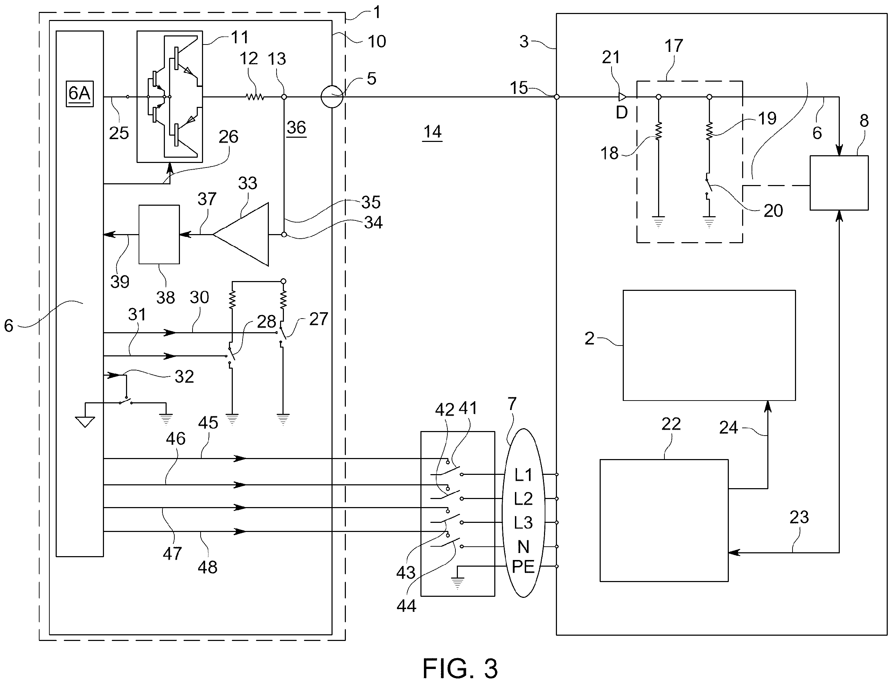

The charging controller 6 of the charging apparatus 1 is adapted to apply switch control signals to one or more relays to switch AC charging phases L1, L2, L3 supplied by the inverter 10 integrated in the charging apparatus 1 via AC phase supply lines of the charging cable 7 to an AC/DC conversion stage connected to the vehicle battery 2 of the electric vehicle 3. In a possible embodiment, the charging controller 6 of the charging apparatus 1 is adapted to process vehicle data received from the vehicle controller 8 of the electric vehicle 3 to switch the switch control signals applied to the one or more relays 41, 42, 43 as shown in Figs. 2 and 3, depending on a charging mode and/or depending on available energy levels of the primary power sources connected to the inverter 10 of the charging apparatus 1. The vehicle data received by the charging controller 6 of the charging apparatus 1 from the vehicle controller 8 of the electric vehicle 3 can comprise in a possible embodiment data indicating a type of the electric vehicle 3 and/or data indicating a type of the vehicle battery 2 of the electric vehicle 3. The vehicle data can further comprise in a possible embodiment an indication of a phase compatibility of the electric vehicle 3. The vehicle data can also comprise required vehicle charging parameters including a charging current capability and a charging voltage capability of the vehicle battery 2. The vehicle data can also indicate in a possible embodiment a charging current capability and a charging voltage capability of the charging cable 7. In a further possible embodiment, the vehicle data received by the charging controller 6 of the charging apparatus 1 from the vehicle controller 8 can also comprise a state of charge SoC of the vehicle battery 2 to be charged by the charging apparatus 1. In a further possible embodiment, the charging apparatus 1 can comprise a user interface 9 having an output unit adapted to display the available charging sources notified by the charging controller 6 of the charging apparatus 1 to the vehicle controller 8 of the electric vehicle 3 by means of the PWM control pilot signal. The output unit of the user interface 9 can also be adapted to display a momentary charging mode as well as available energy levels of the primary power sources connected to the inverter 10 of the charging apparatus 1. The output unit of the user interface 9 can also display charging parameters of the charging apparatus 1 and/or charging parameters of the electric vehicle 3. The display of the output unit can also be adapted to display charging parameters of the vehicle battery 2 of the electric vehicle 3 to be charged by the charging apparatus 1 during the respective charging process. The user interface 9 of the charging apparatus 1 can also comprise an input unit adapted to receive user commands of a user. In the embodiment illustrated in the block diagram of Fig. 1, the charging controller 6 can be integrated in an inverter 10 of the charging apparatus 1. The user interface 9 can be implemented by a smart portable device connected to the charging controller 6 via a wireless or wired interface.

In a further possible embodiment of the charging apparatus 1 according to the first aspect of the present a pin of an IO interface of an inverter or photovoltaic device is provided to be multiplexed to a pilot control function to charge the vehicle battery 2 of the electric vehicle 3 by connecting a charging cable 7 to this terminal to control the charge process or charging event.

Fig. 2 shows a block diagram of a possible exemplary embodiment of a charging apparatus 1 according to the first aspect of the present invention. The electric vehicle 3 comprising the vehicle battery 2 is connectable via a charging cable 7 to the inverter 10 of the charging apparatus 1. In the embodiment illustrated in Fig. 2, the charging controller 6 is integrated in the inverter 10 to control the charging process. In an alternative embodiment, the charging controller 6 does also comprise a separate controller of the charging apparatus 1 connected via an interface to the inverter 10. The charging controller 6 is connected in the illustrated embodiment of Fig. 2 to a push-pull stage 11 comprising power transistor stages. The output of the push-pull stage 11 is connected via a standard resistor 12 and a node 13 to the control pilot pin 5 of the connector 4. The control pilot pin 5 is connected via a signal line 14 to a signal input 15 of the electric vehicle 3. The signal input 15 is connected via an internal signal line 16 of a communication bus within the electric vehicle 3 to the vehicle controller 8 of the electric vehicle 3 as shown in Fig. 2. A voltage divider circuit 17 comprising resistors 18, 19 and a controllable switch 20 are connected via a diode 21 to the signal input pin 15 of the electric vehicle 3 as shown in Fig. 2. A switch 20 of the voltage divider circuit 17 such as a transistor can be controlled by the vehicle controller 8 as shown in Fig. 2.

The electric vehicle 3 comprises in the illustrated embodiment an AC/DC conversion stage 22 connected via control lines 23 to the vehicle controller 8. The AC/DC conversion stage 22 comprises a DC output connected via internal power lines 24 to the vehicle battery 2. The AC/DC conversion stage 22 receives AC power via the power lines 24 of the power cable 7 from the inverter 10 of the charging apparatus 1. The AC/DC conversion stage 22 is adapted to convert a received AC power into a DC power supplied to the vehicle battery 2 via the power lines 24 for recharging of the electric vehicle battery 2.

In the illustrated embodiment of Fig. 2, the charging controller 6 comprises an integrated PWM signal generator 6A. The PWM signal generator 6A is adapted to generate a PWM signal supplied via signal line 25 to an input of the push-pull stage 11. The PWM signal is amplified by the push-pull stage 11 and supplied via the resistor 12 to the control pilot pin 5 of the charging apparatus 1. The signal amplitude of the PWM signal can be modulated by means of the push-pull stage 11 under control of the charging controller 6. Accordingly, the PWM control pilot signal output by the push-pull stage 11 can comprise in a possible embodiment a modulated signal amplitude which encodes available and activated AC charging phases L1, L2, L3 of the charging apparatus 1. The PWM control pilot signal can further comprise a modulated duty cycle encoding further charging parameters relevant for charging the vehicle battery 2 of the electric vehicle 3 during the charging process. In the illustrated embodiment, the charging controller 6 is adapted to control switches 27, 28, 29 via control signal lines 30, 31, 32.

In a possible embodiment an Enable signal can be applied by the charging controller 6 to the push-pull stage 11 via line 26.

An integrated comparator 33 can be provided to determine voltage levels at a node 34 connected via a line 35 to node 13 as shown in Fig. 2. The voltage at node 34 can be compared to at least one threshold voltage by the comparator 33 to determine momentary voltage levels at node 34 connected via lines 35, 36 to the control pilot pin 5 of the connector 4. The output of the comparator 33 is connected via a line 37 to a mono flop 38 indicating via line 39 a stable state to the charging controller 6. In a further possible embodiment, the signal at node 34 is detected directly by an ADC of the charging controller 6. The ADC may substitute the comparator 33 and the mono flop 38 and can be integrated in the charging controller 6.

In the illustrated embodiment of Fig.2 the inverter 10 comprises a further controller 40 connected via an interface INT to the vehicle controller 8. In the illustrated embodiment, the second controller 40 is adapted to control relays 41, 42, 43, 44 via corresponding control signal lines 45, 46, 47, 48. In the illustrated embodiment, the AC power lines L1, L2, L3 of the charging cable 7 can be switched to corresponding AC power supply phases L1, L2 ,L3 of the inverter 10 or of a local power supply grid in response to the control signals supplied by the microcontroller 40 to the corresponding switches 41,42, 43, 44 as illustrated in Fig. 2.

The charging apparatus 1 comprises in a possible implementation a 16-pin connector 4 including the control pilot pin 5. The vehicle controller 8 of the electric vehicle 3 is able to receive the PWM control pilot signal via the communication signal line 14 as shown in Fig. 2.

During an initial installation procedure, a user can select by means of the user interface 9 a pin of the connector 4 and assign functionalities such that the pin 5 does act as a control pilot pin CPP when a wall box functionality of the inverter 10 is enabled. The control pilot pin 5 can be used in a possible embodiment as an AC type 1/2 compatible charge pin for AC slow/fast charging of the electric vehicle battery 2. At other times, when a wallbox functionality of the inverter 10 is disabled, the control pilot pin 5 can be used for a specific set of functions. A set of functions may comprise a digital input (general purpose), a digital output (general purpose), an analog input in a range of e.g. 0 to 10 Volt, an analog output in a range of e.g. 0 to 10 Volt. Further, the control pilot pin 5 can be used when the wallbox functionality is disabled for a serial data protocol.

In a possible embodiment, the connector 4 is adapted to recognize that a charger is connected to the electric vehicle side port based on a measured current or a voltage change.

Different states for charging can be indicated via the voltage level at the control pilot pin 5. In a possible implementation, a voltage level of 12 Volt indicates that no electric vehicle 3 is connected to the charging apparatus 1 and that the inverter 10 is ready for charging. A second voltage level of 9 Volt indicates that the electric vehicle 3 with its electric vehicle battery 2 has been connected to the charging apparatus 1. A voltage level of 6 Volt can indicate in a possible implementation that the electric vehicle 3 is ready to charge and does not require ventilation. A further voltage level of, e.g., 3 Volt can indicate that the electric vehicle 3 is ready to charge but requires ventilation. Any voltage level which is undefined can be used to indicate a specific fault status.

Further, it is possible to use voltage levels to indicate available or possible AC phases L for charging such as phases L1, L2 or L3.

In a possible implementation, a voltage level of 6 Volt does indicate that the electric vehicle 3 is ready to charge (not requiring ventilation) and also indicates by default that charging of the vehicle battery 2 with three phases L1, L2, L3 is possible. Further, a voltage level of 5 Volt can indicate that the electric vehicle 3 is ready to charge (not requiring ventilation) and indicates that only two phases L1, L2 for charging are available. Further, a lower voltage level of 4 Volt can also indicate that the electric vehicle 3 is ready to charge (not requiring ventilation) and indicates that only a single phase is available for charging the vehicle battery 2 of the electric vehicle 3.

Different voltage levels indicating the availability of power sources, in particular AC charging phases L1, L2, L3 can be generated by the charging controller 6 of the inverter 10 of the charging apparatus 1 by considering energy management requirements, in particular available primary and secondary power sources.

In a possible embodiment, the vehicle controller 8 of the electric vehicle 3 can transmit vehicle data to the charging controller 6 of the charging apparatus 1. In a further possible embodiment, the vehicle data received by the charging controller 6 of the charging apparatus 1 from the vehicle controller 8 may comprise data indicating a type of the electric vehicle 3 or indicating a type of the vehicle battery 2 provided within the chassis of the electric vehicle 3. The vehicle data can also provide additional information to the charging controller 6 which can be evaluated to optimize the charging process. This additional information can for instance comprise an indication of the phase compatibility of the electric vehicle 3. For instance, the electric vehicle 3 may only be chargeable by using a single phase L. Another type of an electric vehicle 3 may also be able for performing a charging process involving several current phases L1, L2, L3. The vehicle data can also comprise vehicle charging parameters including a charging current capability (e.g. a maximum allowable charging current) and a charging voltage capability (e.g. a maximum charging voltage) of the respective vehicle battery 2. Further, the vehicle data can comprise also charging parameters including charging current capabilities and/or a charging voltage capability of the used charging cable 7. In a further possible embodiment, the vehicle data can also indicate the current state of charge SoC of the vehicle battery 2 to be charged. In a possible embodiment, the vehicle data can also include ambient parameters or sensor data provided by sensors of the electric vehicle 3.

In a possible embodiment, the charging controller 6 of the inverter 10 can receive available energy levels from one or more power sources. For instance, a primary power source comprising one or more photovoltaic panels can indicate a currently available energy level to the charging controller 6. From the received data, the controller 6 can calculate in a possible embodiment available phase power supplies L1, L2, L3 which can be generated by the inverter 10 for the currently available energy levels of the local power sources including for instance photovoltaic panels. The charging controller 6 of the inverter 10 can then transmit via the control pilot pin 5 of the connector 4 a corresponding PWM scheme based on the available phase power supplies L1, L2, L3. The PWM scheme comprises a PWM control pilot signal which encodes the available power sources of the charging apparatus 1 to the vehicle controller 8 of the electric vehicle 3. The charging controller 6 of the charging apparatus 1 can transmit via the control pilot pin 5 a PWM control pilot signal indicating in encoded form momentary available AC power phases L of electrical power which can be supplied by the charging apparatus 1 to the electric vehicle 3 based on the momentary available electrical power provided by the local power sources connected to the charging apparatus 1.

The PWM control pilot signal can in a possible implementation be transmitted periodically at periodic intervals of time. In a further possible embodiment, the PWM control pilot signal may be transmitted by the charging controller 6 to the vehicle controller 8 at the beginning of the charging process. In a still further possible embodiment, the PWM control pilot signal is transmitted by the charging controller 6 to the vehicle controller 8 continuously.

In response to the received PWM control pilot signal, the vehicle controller 8 of the electric vehicle 3 can adjust the power consumption based on the received parameters encoded by the PWM control pilot signal. In response to the PWM control pilot signal, the vehicle controller 8 can reduce or increase the power consumption of the electrical power received via the charging cable 7. Encoding of parameters can be performed by modulating the signal amplitude of the PWM control pilot signal and/or by modulating a duty cycle of the PWM control pilot signal. The modulated duty cycle of the PWM control pilot signal can encode in a possible implementation charging parameters relevant for charging the vehicle battery 2 of the electric vehicle 3 during the charging process. In a possible embodiment, the PWM control pilot signal is configured to control the charging of the electric vehicle battery 2 based on the electric energy generated by the primary power sources of the charging apparatus 1. The charging cable 7 is adapted to transfer in a possible embodiment an AC energy, i.e. AC phases L1, L2, L3, as also illustrated in the embodiment of Fig. 2. This AC energy can be generated by the inverter 10 of the charging apparatus 1 and/or can be supplied by a local power supply grid. The charging cable 7 can be provided to transfer predefined values of electrical voltage or electrical current. The charging cable 7 can comprise a predefined charging current capability and/or a predefined charging voltage capability. The current capability of the charging cable 7 indicates the maximum electrical current that can be transferred via the charging cable 7 from the charging apparatus 1 to the electric vehicle 3. The charging voltage capability of the charging cable 7 can indicate the maximum voltage admissible during the charging process. The charging current capability and the charging voltage capability of the charging cable 7 can be notified to the charging controller 6 of the charging apparatus 1 and can be taken into account for optimizing the charging process in view of available power sources of the charging apparatus 1 and the electrical power generated by the available power sources over time.

In a possible embodiment, the charging apparatus 1 can provide different AC voltage levels for a type 1 AC charging and for a type 2 AC charging.

In a possible embodiment, the vehicle controller 8 can also communicate with a traction battery controller and/or with other controllers integrated in the electric vehicle 3. The electric vehicle 3 can also comprise a display system with a human machine interface HMI. The display system of the electric vehicle 3 can display information to a driver or a user of the electric vehicle 3, in particular during the charging process. The user interface 9 of the charging apparatus 1 can also comprise a display system having a display unit to display information to the user during the charging process. The display system can also comprise a virtual reality and/or an augmented reality display system. In a possible implementation, connection information among the different entities of the charging system can also be displayed to a user. Also, errors occurring during the charging process at different kinds of charging levels can be displayed to a user either through the display system of the electric vehicle 3 and/or through the display system of the charging apparatus 1. The charging apparatus 1 comprises in a possible embodiment a user interface 9 having an output unit or display adapted to display the available charging power sources notified by the charging controller 6 of the charging apparatus 1 to the vehicle controller 8 of the electric vehicle 3 by means of the PWM control pilot signal. Other information displayed to the user by means of a display unit of the user interface 9 can comprise also a momentary selected charging mode as well as the available energy levels of the primary and/or secondary power sources connected to the inverter 10 of the charging apparatus 1. Charging parameters of interest concerning the charging apparatus 1 and/or the electric vehicle 3 and/or the vehicle battery 2 of the electric vehicle 3 can be displayed as well.

A mode of charging can be detected by the charging controller 6 of the inverter 10 and can be displayed via the display unit of the user interface 9. The charging mode may comprise a slow charging mode and a fast charging mode. Further, a change in the charging speed for phase compatibility can also be displayed to the user.

In a possible embodiment, the inverter 10 of the charging apparatus 1 comprises a local data memory. The data memory and the charging controller 6 of the inverter 10 can be integrated in a possible embodiment as a single chip. In a possible implementation, the memory can store a charging pattern and error details for further diagnosis and performance improvement during the charging process.

In a possible embodiment, the inverter 10 further comprises a configuration data memory to store configurations and setups. The configuration can include a configuration of a charging software. Further, configuration data can also comprise a type of the charging cable 7 used for charging the electric vehicle battery 2. This configuration data can indicate a maximum power/current capability of the charging cable 7. In a possible embodiment, the vehicle controller 8 of the electric vehicle 3 can identify the used charging cable type. This information can be forwarded by the vehicle controller 8 to the charging controller 6 of the charging apparatus 1 to optimize the charging process.

In a preferred embodiment, the inverter 10 of the charging apparatus 1 can be connected to one or more renewable power sources. These renewable primary power sources can comprise photovoltaic arrays or wind turbines. The inverter 10 of the charging apparatus 1 can also be connected to secondary power sources including a power supply grid or a local energy storage bank.

In the embodiment illustrated in Fig. 2, the relays 41 to 44 are integrated in the inverter 10 of the charging apparatus 1.

Fig. 3 illustrates a further exemplary embodiment with external AC relays. In the illustrated embodiment of Fig. 3, other GPIOs of the connector 4 are used to control up to three relays 41, 42, 43 for a single-phase charging or for a multiple phase charging with two or three phases L. In most use cases, the charging apparatus 1 comprises a charging capacity where charging is performed with a single phase L or with three phases L1, L2, L3. In a possible embodiment, the charging apparatus 1 can also support charging using two electrical phases L.

In the embodiment illustrated in Figs. 1, 2, 3, a single electric vehicle 3 is connected via a corresponding charging cable 7 to the charging apparatus 1. In an alternative embodiment, multiple electric vehicles 3 can be connected to the charging apparatus 1 at the same time by using associated charging cables 7.

The PWM control pilot signal can also be used to transmit commands to start, pause and stop a charging process for charging the vehicle battery 2 of the electric vehicle 3 by the charging apparatus 1. For example, in a possible implementation, to pause a charging process, a PWM control pilot signal can be turned off by the charging controller 6 to leave a steady 6 Volt signal. In an alternative implementation, a predefined voltage level can be sent by the inverter 10 of the charging apparatus 1 to the vehicle controller 8, for instance a voltage level of 1 Volt.

In a preferred embodiment, the vehicle controller 8 of the electric vehicle 3 can transmit vehicle data to the charging controller 6 of the inverter 10. The charging controller 6 of the inverter 10 uses the received vehicle data to generate the PWM control pilot signal to control the charging of the electric vehicle battery 2. For example, based on the electrical current, voltage and SoC level of the vehicle battery 2, a charging phase can be altered by the charging controller 6 of the charging apparatus 1. This can be achieved by controlling the relays 41, 42, 43 directly by the charging controller 6 as illustrated in the embodiment of Fig. 3 or indirectly via the microcontroller 40 connected to the charging controller 6 via the interface 26 as illustrated in the embodiment of Fig. 2.

In a further possible embodiment, the vehicle controller 8 can transmit vehicle data to the charging controller 6 of the inverter 10 to initiate an automatic start of the charging process to charge the vehicle battery 2 of the electric vehicle 3. The charging can be performed automatically taking into account the phase capabilities of the connected electric vehicle 3. If the vehicle controller 8 indicates that the electric vehicle 3 can only be charged using a single phase, the relays 41, 42, 43 are controlled accordingly to provide such a single-phase charging of the vehicle battery 2. In contrast, if the vehicle controller 8 indicates that the electric vehicle 3 has a three-phase charging capability, the relays 41, 42, 43 are controlled such that all three phases L1, L2, L3 are used for charging the respective electric vehicle battery 2. In this way, the charging apparatus 1 can be used for different types of electric vehicles 3 with different charging capabilities to optimize the respective charging process.

The charging controller 6 is adapted to send information by changing the PWM voltage level on the control pilot pin 5 to indicate which AC charging phases L1, L2, L3 are available for charging the vehicle battery 2 to the vehicle controller 8 to trigger a soft switching on the concerned AC charging phases L1, L2, L3. The charging controller 6 is capable in a possible embodiment to change the available AC charging phases L1, L2, L3 during the charging process or charging event.

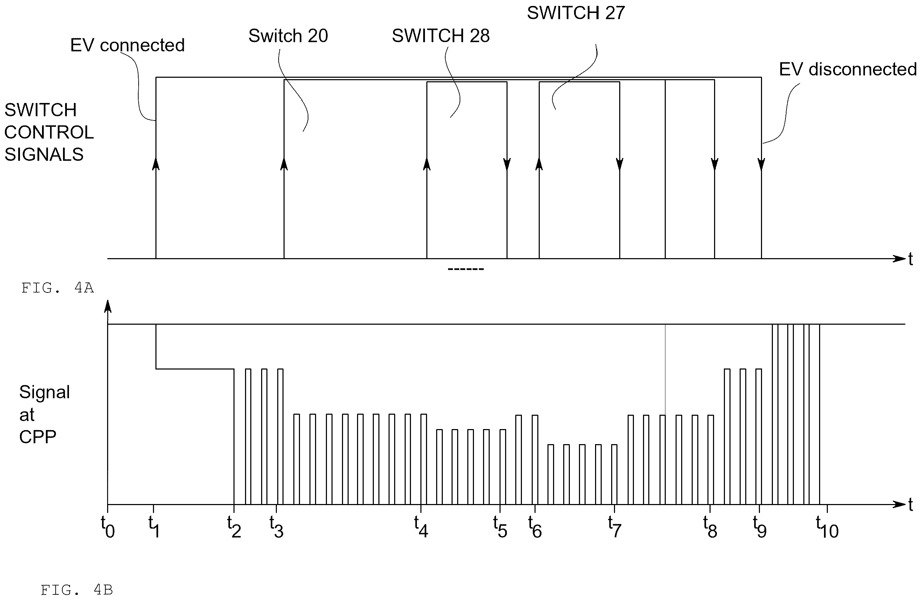

Figs. 4A, 4B show signal diagrams to illustrate the functionality of the method and apparatus according to the present invention on the basis of an example. Fig.4A shows the state transition commands. Fig.4B illustrates a signal diagram of a signal at the control pilot pin 5 including between time t2 and time t10 a PWM control pilot signal with PWM pulses transmitted by the charging controller 6 to the vehicle controller 8 of the electric vehicle 3. The PWM control pilot signal illustrated in Fig. 4B encodes available power sources of the charging apparatus 1 to the vehicle controller 8 of the electric vehicle 3.

Initially, at time t₀, a steady voltage of 12 Volt is supplied indicating that no electric vehicle 3 has been connected and that the inverter 10 of the charging apparatus 1 is ready for the charging process.

At time t₁, the electric vehicle 3 is connected to the charging apparatus 1 and the steady voltage drops from 12 Volt to 9 Volt as illustrated in Fig. 4B.

At time t₂, PWM signal pulses comprising a signal amplitude of 9 Volt are transmitted to the vehicle controller 8 of the connected electric vehicle 3 until the vehicle controller 8 of the electric vehicle 3 indicates at time t₃ that the electric vehicle 3 is ready to be charged by the charging apparatus 1. For this purpose, the vehicle controller 8 of the electric vehicle 3 closes switch 20 illustrated in Figs. 2, 3. In an alternative embodiment, the switch 20 can also be set by a user or a driver of the electric vehicle 3 via a user interface. As soon as the vehicle controller 8 or the user of the electric vehicle 3 has indicated that the electric vehicle 3 is ready to be charged by the charging apparatus 1 at time t₃, a signal amplitude of the PWM pulses drops from 9 Volt to 6 Volt as illustrated in Fig. 4B.

At time t₄, in the illustrated example a switch 28 is closed by the charging controller 6 to indicate a two-phase charging demand. In the illustrated embodiment, the signal amplitude of the PWM pulses drops from 6 Volt at time t₄ to 5 Volt indicating that a charging process using two charging phases L is possible.

In the illustrated example, at time t₅, the switch 28 is opened again indicating that the two-phase demand has terminated and the signal amplitude of the PWM control pilot signal returns back to the 6 Volt voltage level as shown in Fig. 4B.

At time t₆, a switch 27 is closed indicating a one-phase demand and the signal amplitude of the PWM pulses drops to 4 Volt indicating a single-phase charging possibility.

At time t₇, the switch 27 is opened and the signal amplitude of the PWM control pilot signal pulses returns to the 6 Volt level as shown in Fig. 4B.

At time t₈, the voltage level returns to 9 Volt indicating that the electric vehicle 3 is still connected to the charging apparatus 1.

At time t₉, the electric vehicle 3 is disconnected from the charging apparatus 1 and the signal amplitude of the PWM pulses returns to the 12 Volt voltage level indicating that no electric vehicle 3 is connected.

At time t₁₀, the PWM pulse generation stops and the voltage level returns to the initial steady 12 Volt voltage level as illustrated in Fig. 4B.

In a possible embodiment, the PWM generator 6A of the charging controller 6 can generate PWM pulses with a predefined frequency of e.g. 1 kHz. In a possible preferred embodiment, the frequency of the PWM pulses generated by the PWM pulse generator 6A can also be modulated for encoding further charging parameters being relevant for the charging of the vehicle battery 2 of the electric vehicle 3 during the charging process.

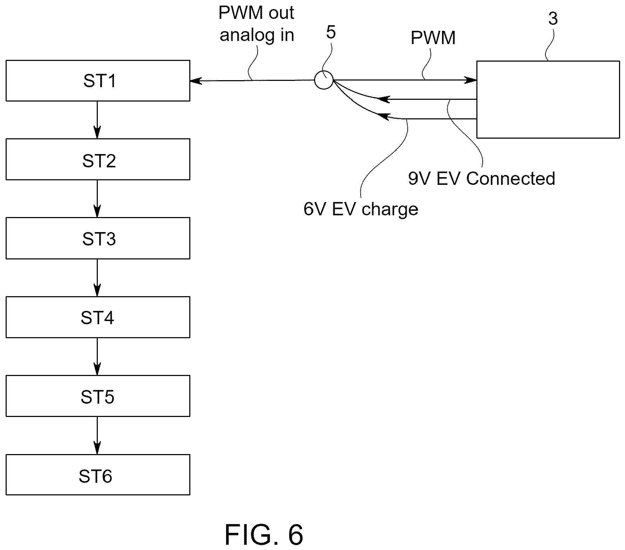

Fig. 6 shows schematically the transitions between states STs performed in response to the PWM control pilot signal illustrated in Fig. 4.

In a first state ST1, the inverter 10 of the charging apparatus 1 is ready for the charging process and a steady 12 Volt output signal is output via the control pilot pin 5.

After the electric vehicle 3 has been plugged to the charging apparatus 1, the voltage level drops at t₁ to 9 Volt and at state ST2, the electric vehicle 3 is plugged to the charging apparatus 1.

In state ST3, the PWM control pilot signal is enabled or switched on at time t₂ as illustrated in Fig. 4. At time t₃, the electric vehicle 3 is ready to be charged by the charging apparatus 1 and there is a transition from state ST3 to state ST4 as shown in Fig. 6. A 6 Volt signal amplitude of the PWM pulses indicates a three-phase charging capability.

In a further state ST5, the AC charging is on and the AC/DC conversion stage 22 receives the AC phases via the charging cable 7 for charging the vehicle battery 2. The charging of the electric vehicle battery 2 is performed in state ST6 as shown in Fig. 6.

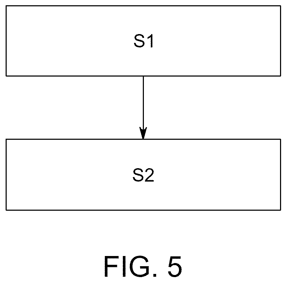

Fig. 5 shows a flowchart for illustrating a possible exemplary embodiment of a method for controlling a charging process for charging a vehicle battery 2 of an electric vehicle 3 by a charging controller 6 of a charging apparatus 1.

In a first step S1, the charging controller 6 of the charging apparatus 1 transmits a PWM control pilot signal encoding available power sources of the charging apparatus 1 to the vehicle controller 8 of the electric vehicle 3. In a possible embodiment, the charging controller 6 is informed at any time how much electric energy is available in the local system, in particular the electrical power which can be generated by primary power sources connected to the inverter 10. For instance, if the photovoltaic array connected to the inverter 10 indicates that much energy is momentarily available, a three-phase charging process including all three phases L1, L2, L3 is possible provided that the electric vehicle 3 and/or the charging cable 7 indicate the corresponding charging capability. In case that the vehicle controller 8 indicates that the electric vehicle 3 comprises a three-phase charging capability and the primary sources generate enough electrical power for a simultaneous three-phase charging process (e.g. 11kW) , the charging controller 6 of the charging apparatus 1 can control the relays accordingly so that all three current phases L1, L2, L3 are simultaneously used to charge the vehicle battery 2 of the electric vehicle 3.

If during the charging operation the generated power provided by the photovoltaic array drops from e.g. 11 kW to 7 kW, this electrical energy might only be sufficient to provide charging using two charging phases. In this scenario, one of the charging phases can be disconnected or deactivated in response to a control signal generated by the charging controller 6 to continue the charging process only with two phases. Accordingly, the charging process can be adapted dynamically to the momentary charging power generation capacities of the primary power sources connected to the inverter 10 of the charging apparatus 1.

The voltage levels of the signal amplitude of the PWM pulses encoding the possible AC charging phases L1, L2, L3 are generated by the charging controller 6 of the charging apparatus 1 by considering the information known to the local energy management. For instance, if local consumer entities require additional electrical power, the power supply capabilities for charging the vehicle battery 2 may drop temporarily and the charging controller 6 may disconnect for instance one AC charging phase L to redirect the generated power to the demanding local power-consuming entity. The local power-consuming entity can be a device connected to the inverter 10 of the local system controlled by the local energy management system. If the local consumer entity does no longer demand to be provided with electrical power, more electrical power is available for continuing the charging process of the vehicle battery 2 of the connected electric vehicle 3 and the disconnected AC charging phase L can be reactivated for speeding up the charging process of the vehicle battery 2.

In a possible implementation, the charging controller 6 of the charging apparatus 1 can also take into account priority settings input by the user via the input unit of the user interface 9. For instance, a user can set a priority for a charging process of the vehicle battery 2 of the electric vehicle 3 to guarantee that all available power generated by local power sources is used to charge the vehicle battery 2 of the vehicle 3 as fast as possible using the available power sources. In this case, even when a local consumer demands a power supply, none of the available AC power supply phases L is redirected and all available three power supply phases L1, L2, L3 are used for supplying the AC/DC conversion stage 22 of the electric vehicle 3 with electrical AC power.

In the flowchart illustrated in Fig. 5, the power consumption of the vehicle battery 2 during the charging process can be adjusted in step S2 by the vehicle controller 8 of the electric vehicle 3 dynamically in response to the PWM control pilot signal received from the charging controller 6 of the charging apparatus 1. The PWM control pilot signal comprises a modulated signal amplitude encoding the available AC charging phases L1, L2, L3. Further, a modulated duty cycle can encode further charging parameters relevant for the charging of the vehicle battery 2 during the respective charging process.

The signal amplitudes or voltage levels as illustrated in the signal diagram of Fig. 4 are exemplary and other voltage levels can be used to encode information such as information about available AC charging phases. In the signal diagram of Fig. 4, the duty cycle and the PWM control pilot signal is constant. However, in further embodiments, the duty cycle can also be modulated to encode further charging parameters, for instance the available current capability of the charging apparatus 1.

## Claims

1. A charging apparatus (1) for charging a vehicle battery (2) of an electric vehicle (3) comprising:
a connector (4) having a control pilot pin (5) used by a charging controller (6) of said charging apparatus (1) to control a charging of the vehicle battery (2) of an electric vehicle (3) connected via a charging cable (7) to said charging apparatus (1),
wherein the charging controller (6) is adapted to
transmit via the control pilot pin (5) a PWM control pilot signal encoding available power sources of said charging apparatus (1) to a vehicle controller (8) of the electric vehicle (3),
apply switch control signals to one or more relays (41, 42, 43) to switch AC charging phases (L1, L2, L3) supplied by an inverter (10) of the charging apparatus (1) via AC phase or photovoltaic panel DC supply lines, and
send information by changing the PWM voltage level on the control pilot pin (5) to indicate which AC charging phases (L1, L2, L3) are available for charging the vehicle battery (2) to the vehicle controller (8) to trigger a soft switching on the concerned AC charging phases (L1, L2, L3).

2. The charging apparatus according to claim 1,
wherein the PWM control pilot signal comprises a modulated signal amplitude encoding available AC charging phases (L1, L2, L3) of the charging apparatus (1).

3. The charging apparatus according to claim 1 or 2,
wherein the PWM control pilot signal comprises a modulated duty cycle encoding further charging parameters relevant for charging the vehicle battery (2) of the electric vehicle (3) during a charging process.

4. The charging apparatus according to any of the preceding claims,
wherein the inverter (10) is adapted to convert a current generated by at least one primary power source into at least one AC charging phase (L1, L2, L3) forming an available power source of said charging apparatus (1).

5. The charging apparatus according to claim 4,
wherein the primary power source of the charging apparatus (1) comprises one or more photovoltaic panels.

6. The charging apparatus according to claim 4 or 5,
wherein the charging controller (6) of the charging apparatus (1) is adapted to evaluate available energy levels of the primary power sources connected to the inverter (10) of said charging apparatus (1) to activate or deactivate available AC charging phases (L1, L2, L3) and to notify the vehicle controller (8) of the electric vehicle (3) by modulating the signal amplitude of the PWM control pilot signal accordingly.

7. The charging apparatus according to any of the preceding claims,
wherein the vehicle controller (8) of the electric vehicle (3) is adapted to adjust the power consumption during a charging process of the vehicle battery (3) in response to the PWM control pilot signal received through the control pilot pin (5) of the connector (4) from the charging controller (6) of said charging apparatus (1).

8. The charging apparatus according to any one of the preceding claims,
wherein the charging controller (6) is adapted to change the available AC charging phases during the charging process.

9. The charging apparatus according to any one of the preceding claims,
wherein the charging controller (6) of the charging apparatus (1) is adapted to process vehicle data received from the vehicle controller (8) of the electric vehicle (3) to generate the switch control signals applied to the one or more relays (41, 42, 43) depending on a charging mode and/or depending on available energy levels of the primary power sources connected to the inverter (10) of the charging apparatus (1).

10. The charging apparatus according to claim 9,
wherein the vehicle data received by the charging controller (6) of the charging apparatus (1) from the vehicle controller (8) of the electric vehicle (3) comprises data indicating a type of the electric vehicle (3) and/or data indicating a type of the vehicle battery (2) within the electric vehicle (3), data indicating a phase compatibility of the electric vehicle (3) and data indicating required vehicle charging parameters including a charging current capability and a charging voltage capability of the vehicle battery (2) and/or of the charging cable (7) and a state of charge, SoC, of the vehicle battery (2).

11. The charging apparatus according to any of the preceding claims,
wherein the charging apparatus (1) comprises a user interface (9) having an output unit adapted to display the available charging sources notified by the charging controller (6) of the charging apparatus (1) to the vehicle controller (8) of the electric vehicle (3) by means of the PWM control pilot signal, a momentary charging mode, available energy levels of the primary power sources connected to the inverter (10) of the charging apparatus (1), charging parameters of the charging apparatus (1) and charging parameters of the electric vehicle (3) and/or of the vehicle battery (2) of the electric vehicle (3).

12. The charging apparatus according to claim 11,
wherein the user interface (9) further comprises an input unit adapted to receive user commands of a user.

13. The charging apparatus according to claim 12,
wherein the user interface (9) comprises a smart device connected to the charging controller (6).

14. The charging apparatus according to any of the preceding claims,
wherein the charging apparatus (1) is connected to at least one secondary power source including the power supply grid and/or an energy storage bank.

15. The charging apparatus according to any of the preceding claims,
wherein a pin of an IO interface of an inverter or photovoltaic device is provided to be multiplexed to a control pilot function to charge the vehicle battery (2) of the electric vehicle (3) by connecting a charging cable (7) to this terminal to control the charge process.

16. A method for controlling a charging process for charging a vehicle battery (2) of an electric vehicle (3) by a charging controller (6) of a charging apparatus (1), the method comprising:
transmitting (S1), by the charging controller (6), a PWM control pilot signal encoding available power sources of said charging apparatus (1) to a vehicle controller (8) of the electric vehicle (3);
applying switch control signals to one or more relays (41, 42, 43) to switch AC charging phases (L1, L2, L3) supplied by an inverter (10) of the charging apparatus (1) via AC phase or photovoltaic panel DC supply lines; and
sending information by changing the PWM voltage level on the control pilot pin (5) to indicate which AC charging phases (L1, L2, L3) are available for charging the vehicle battery (2) to the vehicle controller (8) to trigger a soft switching on the concerned AC charging phases (L1 ,L2, L3).

17. The method according to claim 16,
wherein the power consumption of the vehicle battery (2) is adjusted (S2) during a charging process by the vehicle controller (8) of the electric vehicle (3) in response to the PWM control pilot signal received from the charging controller (6) of the charging apparatus (1).

18. The method according to any of the preceding claims 16 or 17,
wherein the PWM control pilot signal comprises a modulated signal amplitude encoding available AC charging phases (L1, L2, L3).

## Patentansprüche

1. Ladevorrichtung (1) zum Laden einer Fahrzeugbatterie (2) eines Elektrofahrzeugs (3), umfassend:
einen Verbinder (4), der einen Steuerungspilotstift (5) aufweist, der durch einen Lade-Controller (6) der Ladevorrichtung (1) verwendet wird, um ein Laden der Fahrzeugbatterie (2) eines Elektrofahrzeugs (3), das über ein Ladekabel (7) mit der Ladevorrichtung (1) verbunden ist, zu steuern,
wobei der Lade-Controller (6) ausgelegt ist zum:
Senden, über den Steuerungspilotstift (5), eines PWM-Steuerungspilotsignals, das verfügbare Stromquellen der Ladevorrichtung (1) codiert, an einen Fahrzeug-Controller (8) des Elektrofahrzeugs (3),
Anlegen von Schaltsteuersignalen an ein oder mehrere Relais (41, 42, 43), um Wechselstrom-Ladephasen (L1, L2, L3) zu schalten, die durch einen Wechselrichter (10) der Ladevorrichtung (1) über Wechselstromphasen- oder Photovoltaikpaneel-Gleichstromversorgungsleitungen zugeführt werden, und
Senden, an den Fahrzeug-Controller (8), von Informationen durch Ändern des PWM-Spannungspegels an dem Steuerungspilotstift (5), um anzugeben, welche Wechselstrom-Ladephasen (L1, L2, L3) zum Laden der Fahrzeugbatterie (2) zur Verfügung stehen, um ein weiches Schalten an den betreffenden Wechselstrom-Ladephasen (L1, L2, L3) auszulösen.

2. Ladevorrichtung nach Anspruch 1,
wobei das PWM-Steuerungspilotsignal eine modulierte Signalamplitude umfasst, die verfügbare Wechselstrom-Ladephasen (L1, L2, L3) der Ladevorrichtung (1) codiert.

3. Ladevorrichtung nach Anspruch 1 oder 2,
wobei das PWM-Steuerungspilotsignal ein moduliertes Tastverhältnis umfasst, das weitere Ladeparameter codiert, die für das Laden der Fahrzeugbatterie (2) des Elektrofahrzeugs (3) während eines Ladevorgangs relevant sind.

4. Ladevorrichtung nach einem der vorangehenden Ansprüche, wobei der Wechselrichter (10) dafür ausgelegt ist, einen durch mindestens eine primäre Stromquelle erzeugten Strom in mindestens eine Wechselstrom-Ladephase (L1, L2, L3) umzuwandeln, die eine verfügbare Stromquelle der Ladevorrichtung (1) bildet.

5. Ladevorrichtung nach Anspruch 4,
wobei die primäre Stromquelle der Ladevorrichtung (1) ein oder mehrere Photovoltaikpaneele umfasst.

6. Ladevorrichtung nach Anspruch 4 oder 5,
wobei der Lade-Controller (6) der Ladevorrichtung (1) dafür ausgelegt ist, verfügbare Energiepegel der mit dem Wechselrichter (10) der Ladevorrichtung (1) verbundenen primären Stromquellen zu bewerten, um verfügbare Wechselstrom-Ladephasen (L1, L2, L3) zu aktivieren oder zu deaktivieren und den Fahrzeug-Controller (8) des Elektrofahrzeugs (3) durch entsprechendes Modulieren der Signalamplitude des PWM-Steuerungspilotsignals zu benachrichtigen.

7. Ladevorrichtung nach einem der vorangehenden Ansprüche, wobei der Fahrzeug-Controller (8) des Elektrofahrzeugs (3) dafür ausgelegt ist, die Leistungsaufnahme während eines Ladevorgangs der Fahrzeugbatterie (3) in Reaktion auf das PWM-Steuerungspilotsignal, das über den Steuerungspilotstift (5) des Verbinders (4) von der Lade-Controller (6) der Ladevorrichtung (1) empfangen wird, einzustellen.

8. Ladevorrichtung nach einem der vorangehenden Ansprüche, wobei der Lade-Controller (6) dafür ausgelegt ist, die verfügbaren Wechselstrom-Ladephasen während des Ladevorgangs zu ändern.

9. Ladevorrichtung nach einem der vorangehenden Ansprüche, wobei der Lade-Controller (6) der Ladevorrichtung (1) dafür ausgelegt ist, von dem Fahrzeug-Controller (8) des Elektrofahrzeugs (3) empfangene Fahrzeugdaten zu verarbeiten, um die an das eine oder die mehreren Relais (41, 42, 43) angelegten Schaltsteuersignale in Abhängigkeit von einem Lademodus und/oder in Abhängigkeit von verfügbaren Energiepegeln der mit dem Wechselrichter (10) der Ladevorrichtung (1) verbundenen primären Stromquellen zu erzeugen.

10. Ladevorrichtung nach Anspruch 9,
wobei die durch den Lade-Controller (6) der Ladevorrichtung (1) von dem Fahrzeug-Controller (8) des Elektrofahrzeugs (3) empfangenen Fahrzeugdaten Daten, die einen Typ des Elektrofahrzeugs (3) angeben, und/oder Daten, die einen Typ der Fahrzeugbatterie (2) innerhalb des Elektrofahrzeugs (3) angeben, Daten, die eine Phasenkompatibilität des Elektrofahrzeugs (3) angeben, und Daten, die erforderliche Fahrzeugladeparameter, einschließlich einer Ladestromfähigkeit und einer Ladespannungsfähigkeit der Fahrzeugbatterie (2) und/oder des Ladekabels (7) und eines Ladezustands (State of Charge, SoC) der Fahrzeugbatterie (2), angeben, umfassen.

11. Ladevorrichtung nach einem der vorangehenden Ansprüche, wobei die Ladevorrichtung (1) eine Benutzerschnittstelle (9) umfasst, die eine Ausgabeeinheit aufweist, die dafür ausgelegt ist, die verfügbaren Ladequellen, die durch den Lade-Controller (6) der Ladevorrichtung (1) an der Fahrzeug-Controller (8) des Elektrofahrzeugs (3) mittels des PWM-Steuerungspilotsignals bekannt gegeben werden, einen momentanen Lademodus, verfügbare Energiepegel der mit dem Wechselrichter (10) der Ladevorrichtung (1) verbundenen primären Stromquellen, Ladeparameter der Ladevorrichtung (1) und Ladeparameter des Elektrofahrzeugs (3) und/oder der Fahrzeugbatterie (2) des Elektrofahrzeugs (3) anzuzeigen.

12. Ladevorrichtung nach Anspruch 11,
wobei die Benutzerschnittstelle (9) des Weiteren eine Eingabeeinheit umfasst, die dafür ausgelegt ist, Benutzerbefehle eines Benutzers zu empfangen.

13. Ladevorrichtung nach Anspruch 12,
wobei die Benutzerschnittstelle (9) eine intelligente Vorrichtung umfasst, die mit dem Lade-Controller (6) verbunden ist.

14. Ladevorrichtung nach einem der vorangehenden Ansprüche, wobei die Ladevorrichtung (1) mit mindestens einer sekundären Stromquelle verbunden ist, die das Stromversorgungsnetz und/oder eine Energiespeicherbank umfasst.

15. Ladevorrichtung nach einem der vorangehenden Ansprüche, wobei ein Stift einer E/A-Schnittstelle eines Wechselrichters oder einer Photovoltaikvorrichtung bereitgestellt ist, um auf eine Steuerungspilotfunktion multiplexiert zu werden, um die Fahrzeugbatterie (2) des Elektrofahrzeugs (3) zu laden, indem ein Ladekabel (7) mit diesem Anschluss verbunden wird, um den Ladevorgang zu steuern.

16. Verfahren zum Steuern eines Ladevorgangs zum Laden einer Fahrzeugbatterie (2) eines Elektrofahrzeugs (3) durch einen Lade-Controller (6) einer Ladevorrichtung (1), wobei das Verfahren umfasst:
Senden (S1), durch den Lade-Controller (6), eines PWM-Steuerungspilotsignals, das verfügbare Stromquellen der Ladevorrichtung (1) codiert, an einen Fahrzeug-Controller (8) des Elektrofahrzeugs (3);
Anlegen von Schaltsteuersignalen an ein oder mehrere Relais (41, 42, 43), um Wechselstrom-Ladephasen (L1, L2, L3) zu schalten, die durch einen Wechselrichter (10) der Ladevorrichtung (1) über Wechselstromphasen- oder Photovoltaikpaneel-Gleichstromversorgungsleitungen zugeführt werden, und
Senden, an den Fahrzeug-Controller (8), von Informationen durch Ändern des PWM-Spannungspegels an dem Steuerungspilotstift (5), um anzugeben, welche Wechselstrom-Ladephasen (L1, L2, L3) zum Laden der Fahrzeugbatterie (2) zur Verfügung stehen, um ein weiches Schalten an den betreffenden Wechselstrom-Ladephasen (L1, L2, L3) auszulösen.

17. Verfahren nach Anspruch 16,
wobei die Leistungsaufnahme der Fahrzeugbatterie (2) während eines Ladevorgangs durch den Fahrzeug-Controller (8) des Elektrofahrzeugs (3) in Reaktion auf das von dem Lade-Controller (6) der Ladevorrichtung (1) empfangene PWM-Steuerungspilotsignal eingestellt wird (S2).

18. Verfahren nach einem der vorangehenden Ansprüche 16 oder 17,
wobei das PWM-Steuerungspilotsignal eine modulierte Signalamplitude umfasst, die verfügbare Wechselstrom-Ladephasen (L1, L2, L3) codiert.

## Revendications

1. Appareil de charge (1) destiné à charger une batterie de véhicule (2) d'un véhicule électrique (3) comprenant :
un connecteur (4) ayant une broche pilote de commande (5) utilisée par une commande de charge (6) dudit appareil de charge (1) pour commander une charge de la batterie de véhicule (2) d'un véhicule électrique (3) raccordé via un câble de charge (7) audit appareil de charge (1),
dans lequel la commande de charge (6) est adaptée pour transmettre via la broche pilote de commande (5) un signal pilote de commande PWM codant des sources d'alimentation disponibles dudit appareil de charge (1), à une commande de véhicule (8) du véhicule électrique (3),
appliquer des signaux de commande de commutation à un ou plusieurs relais (41, 42, 43) pour commuter des phases de charge AC (L1, L2, L3) fournies par un onduleur (10) de l'appareil de charge (1) via des lignes d'alimentation de phase AC ou d'alimentation DC de panneaux photovoltaïques, et
envoyer des informations en changeant le niveau de tension PWM sur la broche pilote de commande (5) pour indiquer quelles phases de charge AC (L1, L2, L3) sont disponibles pour charger la batterie de véhicule (2), à la commande de véhicule (8) pour déclencher une commutation logicielle sur les phases de charge AC (L1, L2, L3) concernées.

2. Appareil de charge selon la revendication 1,
dans lequel le signal pilote de commande PWM comprend une amplitude de signal modulée codant des phases de charge AC (L1, L2, L3) disponibles de l'appareil de charge (1).

3. Appareil de charge selon la revendication 1 ou 2,
dans lequel le signal pilote de commande PWM comprend un cycle de service modulé codant des paramètres de charge supplémentaires pertinents pour charger la batterie de véhicule (2) du véhicule électrique (3) pendant un processus de charge.

4. Appareil de charge selon l'une quelconque des revendications précédentes,
dans lequel l'onduleur (10) est adapté pour convertir un courant généré par au moins une source d'alimentation primaire en au moins une phase de charge AC (L1, L2, L3) formant une source d'alimentation disponible dudit appareil de charge (1).

5. Appareil de charge selon la revendication 4,
dans lequel la source d'alimentation primaire de l'appareil de charge (1) comprend un ou plusieurs panneaux photovoltaïques.

6. Appareil de charge selon la revendication 4 ou 5,
dans lequel la commande de charge (6) de l'appareil de charge (1) est adaptée pour évaluer des niveaux d'énergie disponibles des sources d'alimentation primaires raccordées à l'onduleur (10) dudit appareil de charge (1) pour activer ou désactiver des phases de charge AC (L1, L2, L3) disponibles et pour informer la commande de véhicule (8) du véhicule électrique (3) en modulant l'amplitude de signal du signal pilote de commande PWM en conséquence.

7. Appareil de charge selon l'une quelconque des revendications précédentes,
dans lequel la commande de véhicule (8) du véhicule électrique (3) est adaptée pour ajuster la consommation d'énergie pendant un processus de charge de la batterie de véhicule (3) en réponse au signal pilote de commande PWM reçu par l'intermédiaire de la broche pilote de commande (5) du connecteur (4) provenant de la commande de charge (6) dudit appareil de charge (1).

8. Appareil de charge selon l'une quelconque des revendications précédentes,
dans lequel la commande de charge (6) est adaptée pour changer les phases de charge AC disponibles pendant le processus de charge.

9. Appareil de charge selon l'une quelconque des revendications précédentes,
dans lequel la commande de charge (6) de l'appareil de charge (1) est adaptée pour traiter des données de véhicule reçues de la commande de véhicule (8) du véhicule électrique (3) pour générer les signaux de commande de commutation appliqués au ou aux relais (41, 42, 43) en fonction d'un mode de charge et/ou en fonction de niveaux d'énergie disponibles des sources d'alimentation primaires raccordées à l'onduleur (10) de l'appareil de charge (1).

10. Appareil de charge selon la revendication 9,
dans lequel les données de véhicule reçues par la commande de charge (6) de l'appareil de charge (1) provenant de la commande de véhicule (8) du véhicule électrique (3) comprennent des données indiquant un type du véhicule électrique (3) et/ou des données indiquant un type de la batterie de véhicule (2) à l'intérieur du véhicule électrique (3), des données indiquant une compatibilité de phases du véhicule électrique (3) et des données indiquant des paramètres de charge de véhicule requis comportant une capacité en courant de charge et une capacité en tension de charge de la batterie de véhicule (2) et/ou du câble de charge (7) et un état de charge (State of Charge, SoC) de la batterie de véhicule (2).

11. Appareil de charge selon l'une quelconque des revendications précédentes,
dans lequel l'appareil de charge (1) comprend une interface utilisateur (9) ayant une unité de sortie adaptée pour afficher les sources de charge disponibles notifiées par la commande de charge (6) de l'appareil de charge (1) à la commande de véhicule (8) du véhicule électrique (3) au moyen du signal pilote de commande PWM, un mode de charge momentanée, des niveaux d'énergie disponibles des sources d'alimentation primaire raccordées à l'onduleur (10) de l'appareil de charge (1), des paramètres de charge de l'appareil de charge (1) et des paramètres de charge du véhicule électrique (3) et/ou de la batterie de véhicule (2) du véhicule électrique (3).

12. Appareil de charge selon la revendication 11,
dans lequel l'interface utilisateur (9) comprend en outre une unité d'entrée adaptée pour recevoir des commandes d'utilisateur d'un utilisateur.

13. Appareil de charge selon la revendication 12,
dans lequel l'interface utilisateur (9) comprend un dispositif intelligent raccordé à la commande de charge (6) .

14. Appareil de charge selon l'une quelconque des revendications précédentes,
dans lequel l'appareil de charge (1) est raccordé à au moins une source d'alimentation secondaire comportant le réseau d'alimentation électrique et/ou un banc de stockage d'énergie.

15. Appareil de charge selon l'une quelconque des revendications précédentes,
dans lequel une broche d'une interface IO d'un onduleur ou d'un dispositif photovoltaïque est prévue pour être multiplexée à une fonction pilote de commande pour charger la batterie de véhicule (2) du véhicule électrique (3) en raccordant un câble de charge (7) à cette borne pour commander le processus de charge.

16. Procédé pour commander un processus de charge pour charger une batterie de véhicule (2) d'un véhicule électrique (3) par une commande de charge (6) d'un appareil de charge (1), le procédé comprenant de :
transmettre (S1), par la commande de charge (6), un signal pilote de commande PWM codant des sources d'alimentation disponibles dudit appareil de charge (1), à une commande de véhicule (8) du véhicule électrique (3) ;
appliquer des signaux de commande de commutation à un ou plusieurs relais (41, 42, 43) pour commuter des phases de charge AC (L1, L2, L3) fournies par un onduleur (10) de l'appareil de charge (1) via des lignes d'alimentation de phase AC ou d'alimentation DC de panneaux photovoltaïques ; et
envoyer des informations en changeant le niveau de tension PWM sur la broche pilote de commande (5) pour indiquer quelles phases de charge AC (L1, L2, L3) sont disponibles pour charger la batterie de véhicule (2), à la commande de véhicule (8) pour déclencher une commutation logicielle sur les phases de charge AC (L1, L2, L3) concernées.

17. Procédé selon la revendication 16,
dans lequel la consommation d'énergie de la batterie de véhicule (2) est ajustée (S2) pendant un processus de charge par la commande de véhicule (8) du véhicule électrique (3) en réponse au signal pilote de commande PWM reçu de la commande de charge (6) de l'appareil de charge (1).

18. Procédé selon l'une quelconque des revendications 16 ou 17 précédentes,
dans lequel le signal pilote de commande PWM comprend une amplitude de signal modulée codant des phases de charge AC (L1, L2, L3) disponibles.
